# EUROPEAN PATENT APPLICATION

(11) **EP 2 690 847 A1**
(43) Date of publication of application: **29.01.2014**
(21) Application number: 12178246.0
(22) Date of filing: 27.07.2012
(51) Int. Cl.: H04M 1/725, H04M 3/42, H04W 4/20

(54) **Virtual assistant for a telecommunication system**

(71) Applicant: Constantin Medien AG, 85737 Ismaning (DE)
(72) Inventor: The designation of the inventor has not yet been filed
(74) Representative: Isarpatent

(57) **Abstract**

A virtual assistant (VA) for providing assistance to an associated user in performing telecommunication activities using a mobile device (4) connected to a network (1),
wherein said virtual assistant (VA) is adaptive to a registered telecommunication behavior (TB) of the associated user when performing the telecommunication activities and wherein the virtual assistant (VA) is represented by a virtual assistant character (VAC) being displayed by said user's mobile device (4)
and being configured to express upon assisting said user a virtual behavior which simulates an appearance of a selected character loaded by the user's mobile device (4).

## Description

The invention relates to a virtual assistant for providing assistance to an associated user in performing telecommunication activities in a telecommunication system using a mobile device connected to a network of the telecommunication system.

A virtual assistant of a user can be represented by a graphical representation of the respective user. Such a graphical representation of the user or avatar can have a two- or three-dimensional form. One can differentiate different classes of avatars, for example static avatars which simply represent a person in online domains ranging from discussion forums to blogs or social networks. Further, there are actual digital characters that people can control within virtual worlds, games or digital environments that can in turn have virtual possessions, properties and often can be customized in detail. Avatars are widely used in video games and form essentially the player's representation in the game world. In most games the player's representation is fixed, however, increasingly games offer a basic character model or template and allow the customization of the physical features of the avatar by the user. In modern game consoles a user has the possibility to create a cartoonish version of himself for use in a game.

The user can use a wide range of communication means, mostly through the internet. Examples for the increasing use of real time communication are twitter, Face-book and Skype. Further, users increasingly use mobile devices, in particular smart phones when interacting with other users through a network such as the internet. Because of the plurality of different communication channels such as e-mail, SMS, chats, blogs as well as telephone or instant messaging it becomes increasingly difficult for a user to keep an overview and maintain a control of the different communication channels and communications platforms. Accordingly, there is a need for a user to get assistance when performing telecommunication activities using a mobile device connected to a network such as the internet. There is a need for a virtual assistant forming an electronic proxy of the user helping the respective user in performing telecommunication operations.

This object is achieved by a virtual assistant comprising the features of claim 1.

The invention provides a virtual assistant for providing assistance to an associated user in performing telecommunication activities using a mobile device connected to a network,
wherein said virtual assistant is adaptive to a registered telecommunication behavior of the associated user when performing the telecommunication activities and wherein the virtual assistant is represented by a virtual assistant character being displayed by said user's mobile device and being configured to express upon assisting said user a virtual behavior which simulates an appearance of a selected character loaded by the user's mobile device.

Accordingly, the virtual assistant according to the present invention is adapted to the registered telecommunication behavior of the corresponding associated user and knows how the associated user has behaved in the past when using a telecommunication medium or a telecommunication channel such as e-mails, SMS, messages, websites or social network platforms. The virtual assistant has access to a database in which the registered telecommunication behavior of the associated user is stored for at least a predetermined time. Further, the virtual assistant is represented by a virtual assistant character which can be selected and even configured by the associated user according to his preferences. Accordingly, the interaction between the user and the mobile device when performing telecommunication activities is facilitated because the user can interact with the character of his choice and knows immediately which virtual assistant is associated with himself. This is advantageous, in particular when more than one virtual assistant are displayed on a display of the user's terminal device, wherein the display at the same time shows characters of different users interacting for example in a social network. The virtual assistant character representing the virtual assistant of the user simulates an appearance of a selected character. For example, it can have the appearance of the user himself or of a famous personality selected by the user.

The virtual assistant is self-adaptive to the behavior of the associated user and can learn from experience, in particular by registering the telecommunication behavior of the associated user and/or physical behavior of the user in the real world on the basis of real world data including movement pattern data of the user and/or sensor data generated by sensors attached to the user.

In a possible embodiment of the virtual assistant according to the present invention the virtual assistant character is configured to express upon assisting said user a virtual behavior which simulates not only the appearance of a selected character but also does this depending on a current behavior and/or state of the associated user in the real physical world. For example, if the user moves himself in the real world very fast or does have a high heartbeat rate detected for example by a microphone of a mobile device carried by the user or by an electrode attached to a mobile device of the user the virtual assistant can reflect this user behavior and/or user state in its virtual movements being displayed on the display of the user's mobile device or on a display of another user's device. For example, if a user is jogging through a park another user looking at the display of his mobile device and seeing the virtual assistant character VAC of the jogging user the virtual assistant character VAC associated to the jogging user can be displayed also as jogging on the display of the other user's device.

In a possible embodiment of the virtual assistant according to the present invention the virtual assistant is adaptive to registered telecommunication behavior data, TBD, of its associated user when performing the telecommunication activities and to registered real world data, RWD, of said user's mobile device.

This registered real world data, RWD, can be provided by sensor means of the user's mobile device itself or by sensors connected to the user's mobile device.

In a possible embodiment of the virtual assistant according to the present invention the virtual assistant is represented by a three-dimensional virtual assistant character VAC which can be loaded by the user's mobile device from a virtual assistant-server and displayed on a user interface or display of said user's mobile device.

In a possible embodiment of the virtual assistant according to the present invention the registered real world data, RWD, comprises geographic data indicating an absolute or relative position and/or a movement and/or a movement pattern of the user's mobile device within the real world.

Further, the geographic data can also indicate an absolute or relative position and/or movement and/or movement pattern of another other users' devices transmitted to the user's mobile device via the network.

In a further possible embodiment of the virtual assistant according to the present invention the real world data of said user's mobile device can comprise acoustic data generated by a microphone of the user's mobile device and/or acoustic data of other devices transmitted to the user's mobile device via the network.

In a further possible embodiment of the virtual assistant according to the present invention the real world data further comprises image data and/or video data supplied by a camera of the user's mobile device or supplied from a camera of another device transmitted to the user's mobile device via the network.

In a further possible embodiment of the virtual assistant according to the present invention the real world data of said user's mobile device can comprise sensor data detected by at least one sensor of the user's mobile device or transmitted to said user's mobile device from other devices via the network.

In a possible embodiment this sensor can be a sensor measuring or monitoring a physical parameter of the user, for example a heartbeat rate or a current blood pressure of the user.

In a further possible embodiment of the virtual assistant according to the present invention the virtual assistant of said user is adapted to communicate autonomously with another virtual assistant associated to another user or with a virtual assistant associated with a physical object such as a vehicle via said network.

In a possible embodiment of the virtual assistant according to the present invention the autonomous communication between virtual assistants of different users or physical objects depends on evaluated real world data provided by the mobile devices and/or real world data provided by sensors or transceivers of the physical objects.

In a possible embodiment of the virtual assistant according to the present invention the virtual assistant has access to at least one local and/or remote data storage storing relevant data.

In a possible embodiment the data storage stores data comprising:
telecommunication behavior data, TBD,
real world data, RWD,
user data of the associated user including user preferences and/or user personal data,
infrastructure data including network infrastructure data,
device data including device data of the user's and/or other users' devices,
virtual assistant character data of the virtual assistant character, VAC, representing the virtual assistant of the user and/or virtual assistant character data representing the virtual assistant of other users and
object data of physical objects within the real world.

In a possible embodiment of the virtual assistant according to the present invention the virtual assistant character VAC representing the virtual assistant of the user is adapted to express a virtual behavior which simulates the physical appearance, mimic, emotions, intonation, gestures and/or a moving pattern of the selected character loaded by the user's mobile device from a virtual assistant server connected to the network.

In a further possible embodiment of the virtual assistant according to the present invention the virtual behavior expressed by the virtual assistant character VAC is changed dynamically in response to the evaluated real world data, RWD, of the user's mobile device and/or the evaluated telecommunication behavior data, TBD, of the respective user.

In a further possible embodiment of the virtual assistant according to the present invention the virtual assistant is adapted to interact with the user by speech commands exchanged between the virtual assistant character VAC representing said virtual assistant and the associated user by means of a user interface of said user's mobile device.

In a possible embodiment of the virtual assistant according to the present invention the virtual assistant is adapted to assist the associated user in telecommunication activities comprising the handling and/or the administration of messages including emails, SMS messages, telephone calls, instant messaging, notifications, orders, requests.

In a further possible embodiment of the virtual assistant according to the present invention the virtual assistant is adapted to assist its associated user in telecommunication activities comprising the handling and/or the administration of contact data including addresses, websites and telephone numbers.

In a further possible embodiment of the virtual assistant according to the present invention the virtual assistant is adapted to assist its associated user in telecommunication activities comprising the handling and/or the administration of organization data including calendar data, appointments, time schedules, tasks, reservations, birthdays, holidays.

In a further possible embodiment of the virtual assistant according to the present invention the virtual assistant is adapted to evaluate the registered telecommunication behavior data, TBD, of its associated user and/or to evaluate the registered real world data, RWD, of the user's mobile device for generation of at least one personalized user recommendation, PUR, for the respective user on the basis of the evaluated data and on the basis of data stored in said at least one local or remote data storage comprising telecommunication behavior data, real world data, user data, infrastructure data, device data, virtual assistant character data and/or object data.

In a further possible embodiment of the virtual assistant according to the present invention the personalized user recommendation, PUR, is given to the user by the virtual assistant character VAC representing the virtual assistant of said user by means of a display and/or another user interface of the user's mobile device.

In a further possible embodiment of the virtual assistant according to the present invention the personalized user recommendation, PUR, generated by the virtual assistant of the user comprises a user recommendation for media content or contacts accessible via the network.

In a further possible embodiment of the virtual assistant according to the present invention the personalized user recommendation, PUR, generated by the virtual assistant of the user comprises a user recommendation for events taking place in the real world.

In a further possible embodiment of the virtual assistant according to the present invention the personalized user recommendation, PUR, generated by the virtual assistant of the user comprises a user recommendation for a future telecommunication behavior of the respective user.

In a further possible embodiment of the virtual assistant according to the present invention the personalized user recommendation, PUR, generated by the virtual assistant of the user comprises a user recommendation for a movement of the user in the real world.

In a further possible embodiment of the virtual assistant according to the present invention the personalized user recommendation, PUR, generated by the virtual assistant of the user comprises a user recommendation for handling and/or administration of messages, contact data and/or organization data of the respective user.

In a further possible embodiment of the virtual assistant according to the present invention the virtual assistant comprises an application program executed by a processing unit of the user's mobile device.

In a further possible embodiment of the virtual assistant according to the present invention the virtual assistant and/or the virtual assistant character representing the virtual assistant of the user is loaded by the user's mobile device from a virtual assistants server connected to the network or from a data carrier read by the user's mobile device.

The invention further provides a method comprising the features of claim 19.

The invention provides a method for providing assistance to a user in performing telecommunication activities using a mobile device connected to a network, wherein the method comprises:
Evaluating a registered telecommunication behavior of the user when performing the telecommunication activities and
adapting a virtual assistant associated to the user and configured to assist the associated user in his telecommunication activities depending on the evaluated telecommunication behavior of the user,
wherein said virtual assistant is represented by a virtual assistant character being displayed by said user's mobile device and being configured to express upon assisting said user a virtual behavior which simulates an appearance of a selected character loaded by the user's mobile device.

The invention further provides a network comprising the features of claim 20.

The invention provides a network having access points to which devices of users are connected, wherein each mobile device comprises a virtual assistant providing assistance to an associated user in performing telecommunication activities using the respective mobile device,
wherein said virtual assistant is adapted to a registered telecommunication behavior of its associated user registered when performing the telecommunication activities,
wherein said virtual assistant is represented by a virtual assistant character being displayed by said user's mobile device and being configured to express upon assisting said user a virtual behavior which simulates an appearance of a selected character loaded by the user's mobile device.

In a possible embodiment of the network according to the present invention the virtual assistant is adapted to registered real world data of the user's mobile device, wherein said registered real world data comprises:
geographic data indicating an absolute or relative position and/or movement of the user's mobile device in the real world,
acoustic data generated by a microphone of the user's mobile device,
image data and/or video data supplied by a camera of the user's mobile device and sensor data detected by at least one sensor of the user's mobile device.

In a further possible embodiment of the network according to the present invention the virtual assistant of said mobile device is adapted to generate at least one virtual-ized user recommendation for its associated user depending on the registered telecommunication behavior data of the user and the real world data of the user's mobile device,
wherein the personalized user recommendation is given to said user by the virtual assistant character representing said virtual assistant of the respective user and displayed by a user interface of the user's mobile device.

In the following possible embodiments of the virtual assistant, the method and network for providing assistance to an associated user in performing telecommunication activities are described with reference to the enclosed figures.
- Fig. 1: shows a diagram for illustrating a network employing at least one virtual assistant according to a possible embodiment of the present invention;
- Fig. 2: shows a block diagram of an exemplary embodiment of a mobile device employing a virtual assistant according to the present invention;
- Fig. 3: shows a table illustrating a data content of a data storage used by a virtual assistant according to a possible embodiment of the present invention;
- Fig. 4: shows a further diagram for illustrating a further possible implementation of a network employing at least one virtual assistant according to the present invention;
- Fig. 5: shows a flow chart for illustrating a possible implementation of a method for providing assistance to a user according to the present invention;
- Fig. 6: shows a signal diagram for illustrating a possible function provided by a virtual assistant according to the present invention;
- Fig. 7: shows a further signal diagram for illustrating a further possible function provided by a virtual assistant according to the present invention;
- Fig. 8: shows a further signal diagram for illustrating a further possible function offered by a virtual assistant according to the present invention;
- Fig. 9: shows an example for a message output by a virtual assistant character representing a virtual assistant according to the present invention when providing the function as shown in fig. 8;
- Figs. 10A, 10B: show examples for virtual assistant characters representing virtual assistants for different users according to the present invention;
- Figs. 11 A, 11 B: show examples for virtual assistant characters depending on telecommunication behavior data as used in a specific implementation of the virtual assistant according to the present invention;
- Figs. 12A, 12B, 12C: show further examples of a virtual assistant character depending on real world data as employed in a possible implementation of the virtual assistant according to the present invention;

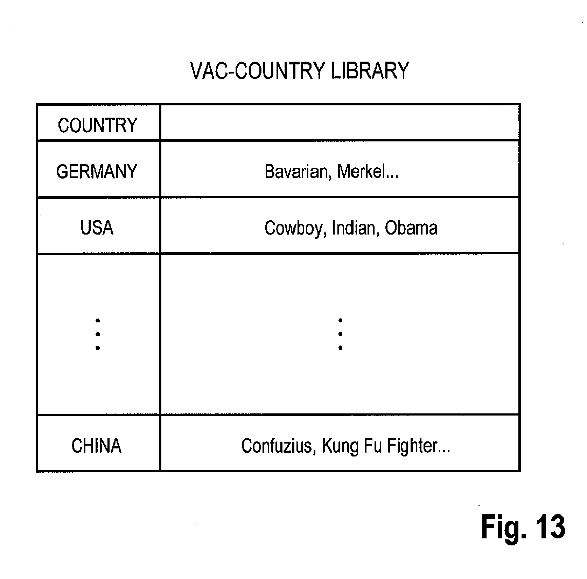

- Fig. 13: shows a table of virtual assistant characters which can be loaded from a library of a virtual assistant server according to
a specific embodiment of the network according to the present invention.

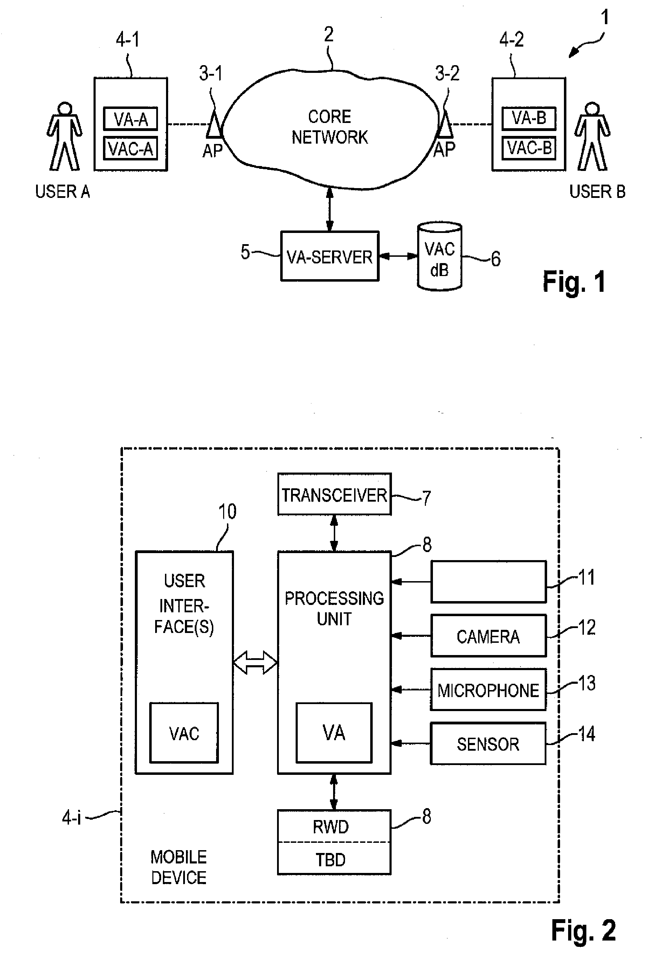

As can be seen in fig. 1 a network 1 according to a possible embodiment of the present invention can comprise at least one core network 2 having in the shown example access points 3-1, 3-2 to which user terminals in particular mobile devices 4-1, 4-2 can be connected via a wireless link. In the shown example of fig. 1 the first mobile device 4-1 belongs to a first user A and the second mobile device 4-2 belongs to a second user B. The mobile devices 4-1, 4-2 can for example be formed by smart phones, PDAs, iPAD, remote control units or laptops of the users. The mobile device 4-1, 4-2 can also be formed by specific mobile devices which are attached to the body of the respective user comprising sensors for registering sensor data of the user, in particular physical parameters such as a heartbeat or a blood pressure of the user. The network 1 can further comprise at least one virtual assistant server 5 having access to a database 6. Both mobile devices 4-1, 4-2 can comprise a virtual assistant VA providing assistance to the associated user in performing telecommunication activities when using the respective mobile device 4-1, 4-2. The virtual assistant VA is adapted to the registered telecommunication behavior of its associated user when performing the telecommunication activities or operations through the core network 2. The virtual assistant VA is represented by a virtual assistant character VAC. For example, the virtual assistant VA-A of user A is represented by a virtual assistant character VAC-A as shown in fig. 1. The virtual assistant character VAC is displayed by the user's mobile device and is configured to express upon assisting said user when performing his telecommunication activities a virtual behavior which simulates an appearance of a selected character loaded by the user's mobile device 4-i. In a possible embodiment the virtual assistant character VAC is loaded by the user's mobile device such as mobile device 4-1 of the first user A from the virtual assistant server 5 having access to the database 6 in which a plurality of different virtual assistant characters VACs can be stored. Alternatively, the virtual assistant character VAC can also be loaded by the mobile device 4-i from a data carrier storing the virtual assistant character VAC.

In a further possible embodiment the user can also use a specific virtual assistant character generation tool for generating a personal virtual assistant character VAC according to his preferences. The core network 2 can comprise a plurality of interrelated network or network domains, in particular the internet. A plurality of servers or websites can be connected to the core network 2 offering different telecommunication services to the user.

Fig. 2 shows a block diagram of a possible implementation of a mobile device 4-i which can be connected to the access point 3-i of the core network 2 via a wireless link. The mobile device 4-i comprises a transceiver 7 which can exchange data and messages with a corresponding access point 3-i via the wireless link. The transceiver 7 is connected to a processing unit 8 of the mobile device 4 as shown in fig. 2. The processing unit 8 can be for example a CPU or a microprocessor running or executing applications programs loaded from a program memory. The processing unit 8 has access to a local data storage 9. The local data storage can be a RAM memory storing registered real world data RWD and/or registered telecommunication behavior data TBD as illustrated in fig. 2. The processing unit 8 executes in a possible embodiment an application program forming the virtual assistant VA of the associated user. The processing unit 8 is connected to at least one user interface 10, for example a graphical user interface GUI having a display for displaying a virtual assistant character VAC as illustrated in fig. 2. The virtual assistant character VAC represents the virtual assistant VA of the associated user of the user's mobile device 4-i. The processing unit 8 is connected with a unit 11 which provides geodetic or geographic data of the user's mobile device 4-i. This geographic data can indicate the absolute or relative position of the user's mobile device 4-i in the real world. For example, this geographic data can comprise coordinates indicating the location of the mobile device 4-i in the real physical world. Further, the geographic data provided by the unit 11 can comprise velocity or movement data or even movement pattern data indicating the movement of the user's mobile device 4-i in the real physical world. In a possible implementation the unit 11 can comprise a GPS unit providing geographic data of the user's mobile device 4-i. The processing unit 8 can further receive geographic data of other mobile devices via the transceiver 7 from the core network 2. In the shown embodiment of fig. 2 the mobile device 4-i further comprises a camera 12 and a microphone 13 as well as a sensor 14. The camera 12 generates image data and/or video data and supplies the processing unit 8 with this data. Further, the processing unit 8 can receive image and/or video data from other devices or terminals through the transceiver 7 via the core network 2. The microphone 13 generates acoustic data, wherein the generated acoustic data are forwarded to the processing unit 8 as shown in fig. 2. The processing unit 8 can also receive acoustic data from other devices or terminals via the transceiver 7 and via the core network 2. The sensor 14 of the user's mobile device 4-i generates sensor data and supplies the sensor data to the processing unit 8. The processing unit 8 can also receive sensor data from other sensors of other user devices via the transceiver 7 and the core network 2. The acoustic data generated by the microphone 13, the image of video data generated by the camera 12 as well as the sensor data generated by the sensor 14 form real world data RWD which can be registered by the processing unit 8 and stored as real world data RWD in the local data storage 9 as illustrated in fig. 2. In a possible embodiment the processing unit 8 processes the geographic data, the acoustic data and the image data to determine a momentary situation of the user. For example the processing unit 8 can decide whether an user is outdoor or indoor and whether the user is in a noisy environment or whether the user is moving or not. The detected situation of the user can be classified by the processing unit 8 and does form a parameter for the telecommunication assistance given by the virtual assistant VA to the associated user in the momentary situation of the user.

The processing unit 8 can monitor the telecommunication behavior TB of the user interacting via the user interface 10 and store the registered telecommunication behavior data TBD in the local data storage 9 as illustrated in fig. 2. The real world data RWD and the registered telecommunication behavior data TBD of the user can also be stored in a remote data storage connected to the core network 2.

The sensor 14 can in a possible implementation be a sensor attached to the body of the respective user and can be provided for monitoring or measuring physical parameters of the user such as the heartbeat or blood pressure of the user. In a possible embodiment also the microphone 13 can detect physical parameters of the user such as the heartbeat when the user's mobile device 4 is positioned accordingly. Further, the microphone 13 may provide a noisy acoustic signal indicating that the user is at the moment at a location where he cannot receive a telephone call or the like. Accordingly, the real world data RWD provided by units 11, 12, 13, 14 generate useful real world information data RWD which can be used by the virtual assistant VA of the user in assisting the user in his daily telecommunication activities. For example, the virtual assistant VA knows where the user is currently located and whether he stands or goes. Further, the virtual assistant is aware whether the user is in an environment where there is high noise so that he cannot receive a telephone call. By evaluating the image data and/or video data provided by the camera 12 the virtual assistant VA can further provide information whether the user is inside or outside of a building. By processing the real world data, RWD, in particular the image data provided by the camera 12 the virtual assistant VA can be aware in what location the user is positioned at the moment, for example whether the user is in his office or at home. This can further be verified by using the geographic data provided by the unit 11. The real world data RWD generated by the units 11, 12, 13, 14 indicate a specific situation and/or state of the user. When assisting the user in his telecommunication activities the virtual assistant VA can take into account this real world data RWD as well as the telecommunication behavior TB of the user in the past. In a possible embodiment the virtual assistant VA is adapted to the registered telecommunication behavior data TBD of its associated user and to the registered real world data RWD of the user's mobile device 4.

The virtual assistant VA is represented by a virtual assistant character VAC which can be displayed on a user interface 10 of the user's mobile device 4 as shown in fig. 2. In a possible embodiment the virtual assistant VA is represented by a three-dimensional virtual assistant character VAC. This three-dimensional virtual assistant character VAC can be loaded in a possible embodiment from the virtual assistant server 5 shown in fig. 1. The virtual assistant character VAC being displayed by the user's mobile device is configured to express upon existing the user a virtual behavior which simulates an appearance of a selected character loaded by the user's mobile device 4. This selected character can for example be downloaded from the virtual assistant server 5 or loaded from a data carrier read by the mobile device 4. In a preferred embodiment the virtual assistant character VAC shows a behavior, i.e. a virtual behavior which depends on the physical behavior and/or physical state of the associated user in the real world. For example, if the real world data RWD indicate that the user is moving in the real world the virtual assistant character VAC can be displayed as also moving in a virtual world. Further, if the real world data RWD such as a sensor data or the geographic data indicate that the user is moving at high speed, e.g. running, the virtual assistant character VAC may also be showed as running in the virtual world. Further, if for instance a sensor 14 or the microphone 13 indicate that the user has a high heartbeat and is agitated the virtual assistant character VAC can also show a movement pattern or behavior which is fast and agitated. In a further possible embodiment the camera 12 connected to the mobile device 4-i can generate images of the face of the user wherein the image data is processed to extract the momentary or current mood of the user A which can be reflected in the expression of the virtual assistant character VAC displayed on the user's mobile device 4-i and depending on the application also on the displays of other users mobile devices. In this way a user communicating with another user via the network 1 can get from the virtual assistant character VAC of the other user valuable information about the current mood and physical behavior of the other user in the real world. Accordingly, a virtual assistant character VAC as used by the network according to the present invention characterizes the associated user also emotionally and indicates its momentary mood and/or state and/or behavior in the real world. In this way the virtual assistant VA of a user can search in a possible embodiment for another virtual assistant VA of another user having the same momentary or current characteristics. If a user shows a sign with his hand such as a victory sign or a hand fist registered by a camera of the user's device the virtual assistant VA can look for other users showing a matching physical behavior, i.e. showing also a victory sign or the like. The physical sign shown by the user in the real world can be registered by a camera of the user's mobile device 4 and then be processed by an image processing software to detect the specific sign. In this way a user can define a physical behavior sign showing that he belongs to a specific group of users. By processing the image data the virtual assistant VA can detect that the associated user shows a specific sign and can look for other virtual assistant characters VACs of other users which show a similar physical sign. In this way users showing the same physical sign to the camera of their respective device can meet or be matched through the network 1. Another example would be that the virtual assistant VA of a user detects that an associated user is laughing to find other users which are in the same mood and connected at the same moment to the network 1. By evaluating the registered real world data RWD the virtual assistant VA has a powerful database for finding other virtual assistants VAs in the network 1 representing users living in the same or a similar manner as the associated user of the virtual assistant VA or being in a similar emotional state or physical situation.

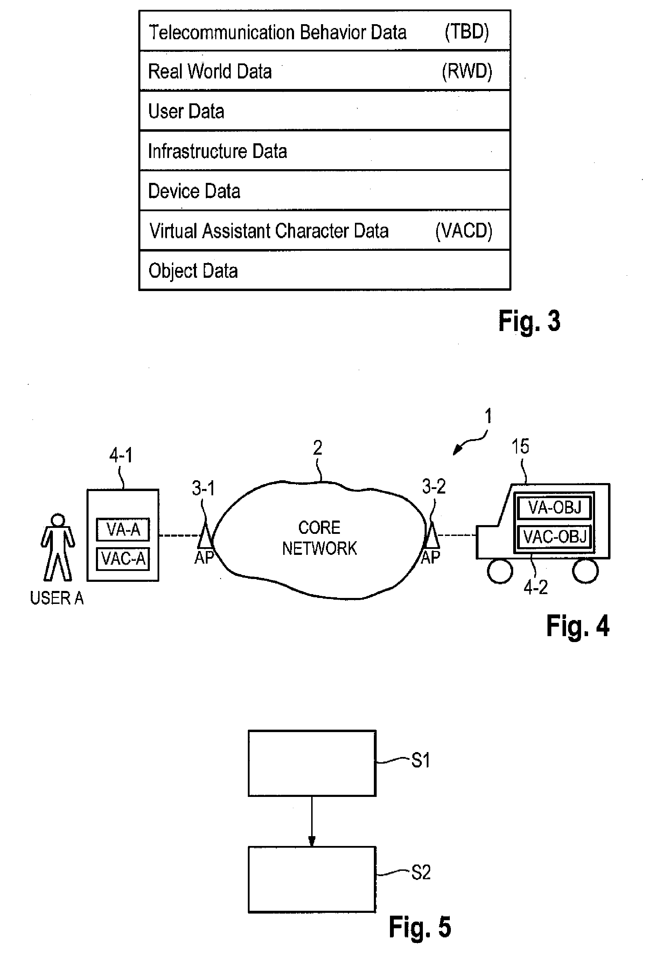

Fig. 3 shows a table of a possible database which can be used by the virtual assistant VA according to the present invention. As shown in the table of fig. 3 a local or remote database used by the virtual assistant VA according to the present invention can comprise the telecommunication behavior data TBD of the associated user or other users as well as real world data RWD of the associated user or other users. The real world data RWD can comprise geographic data, movement data, movement pattern data, image data, video data, acoustic data and/or sensor data.

The database shown in fig. 3 can further comprise user data including user's preferences or user personal data. Moreover, the database can comprise infrastructure data including infrastructure data of the network 1, in particular of the core network 2. Moreover, the database can comprise device data of the user devices and terminals. The database can further comprise virtual assistant character VAC data of the virtual assistant characters VACs representing the virtual assistants VAs of the different users. Moreover, the database can comprise object data of real objects in the physical real world such as cars or buildings.

Fig. 4 shows a further exemplary embodiment of a network 1 according to the present invention providing virtual assistance to associated users in performing their telecommunication activities. In the shown exemplary embodiment the second mobile device 4-2 is integrated in a physical object 15 such as a car which may belong to the user A as shown in fig. 4. In this exemplary embodiment the mobile object 15, i.e. the car of the user A comprises a virtual assistant VA of its own and may be represented by a virtual assistant character VAC-OBJ of the respective object 15. In this way the virtual assistant VA-A of the user A can communicate autonomously with the virtual assistant VA-OBJ of the car 15 of the user A. For example, the virtual assistant VA-A may autonomously inform the virtual assistant VA-OBJ of the car 15 that the user A is approaching. For example, the virtual assistant VA-A of the user A may inform the virtual assistant VA-OBJ of the object 15 that the user A will arrive within two minutes. In response to this autonomous message the virtual assistant VA-OBJ of the car 15 will control for example a heating apparatus within the car 15 to heat up the passenger room and/or passenger seats in the car 15 to get it ready for the imminent drive. Moreover, the virtual assistant VA-OBJ of the car 15 can give directions to the user A to find a best movement route to the car 15. For example, if the car 15 is parked in a big parking house the virtual assistant VA-OBJ can help the virtual assistant VA-A of the user's mobile device 4-i to find the best way to the car 15.

As can be seen from the above example the virtual assistant VA of the user is adapted to communicate autonomously with another virtual assistant VA associated to another user or with the virtual assistant VA of another object associated with the user. For this autonomous communication no input from the user A is needed. The virtual assistant VA-A decides itself when the user A is close enough to the car 15 belonging to the user and will give corresponding instructions to the virtual assistant VA-OBJ of the user's car 15. For example, the virtual assistant VA-A may know from the past that the user A prefers a well-heated car when driving. The virtual assistant VA-A can e.g. request from the virtual assistant VA-OBJ of the car 15 the registered temperature data from the past, i.e. temperature data from the last driving excursions of the user and instruct the virtual assistant VA-OBJ of the car 15 to heat up the car correspondingly when the user A is approaching the car 15. In a possible embodiment the user A will not be bothered by any information concerning the heating up of the car 15 or the like. He might not even notice that his virtual assistant VA-A has provided for the necessary heating of the car 15 during his approach to the car 15. Consequently, the user A will not have to perform any telecommunication activity for achieving this result. The autonomous communication between the virtual assistant VA of the different users or objects depends on the evaluated real world data RWD provided by the mobile devices and/or the real world data RWD provided by physical objects in the real world. The virtual assistant VA can have access to at least one local or remote database storing for example the data shown in the table of fig. 3. The virtual assistant character VAC of a virtual assistant VA of a user can be adapted to express a virtual behavior which simulates a physical appearance, mimic, emotion, intonation, gesture and/or moving pattern of a character downloaded or loaded by the user's mobile device 4, for example the virtual assistant server 5 connected to the core network 2. In a possible embodiment the virtual behavior expressed by the virtual assistant character VAC can be changed dynamically in response to the evaluated real world data RWD of the user's mobile device 4-i and/or the former evaluated telecommunication behavior data TBD of the respective user. For example, if a user is moving fast in the real world the virtual assistant character VAC representing the user can behave in the same manner. In a possible embodiment the virtual assistant VA is adapted to interact with the associated user by speech commands exchanged between the virtual assistant character VAC representing the virtual assistant VA and the associated user by means of a user interface 10 of the user's mobile device 4-i. For example, the virtual assistant VA may read an email received by the virtual assistant VA to its associated user. The virtual assistant VA can be adapted to recognize speech commands and translate them into corresponding actions. For example, if the user mentions "calendar" the virtual assistant displays a calendar on a display of the user's mobile device 4-i. In a possible embodiment the virtual assistant VA or avatar can represent a visualized and animated picture of the program features of the respective system such as a reminder function, a mail input message or an out-of-office assistance. In a specific implementation the virtual assistant VA can support the associated user in handling and administration of the user's e-mails. For example, the virtual assistant VA can process e-mails with different priority. For example, family members and friends as well as business partners are handled with higher priority than other users. The handling can be performed through the evaluation of corresponding relevant calendar data and the responses can be based on predefined text data, i.e. "I come back to you immediately after my current appointment". The e-mails can be shifted according to their priority into corresponding files. The virtual assistant VA can further handle spam e-mails automatically.

The handling and administration of the e-mails can be performed depending on real world data RWD of the respective user's mobile device 4-i. For example, the priority of e-mails received by the user can be different depending on the current location of the user. If the user is for example in the office the highest priority for received e-mails might be e-mails of business partners. In contrast, if the mobile device 4-i of the user is in a private surrounding or at the user's home e-mails from friends and family members might have higher priority than the e-mails of business partners. In a possible implementation the virtual assistant VA of the user compares the current geographic data of the user's mobile device 4 with the geographic data of the user's office or firm and sorts the incoming e-mails, accordingly. If the user's mobile device 4 is at the moment at the user's office e-mails from business partners get the highest priority whereas e-mails from family or friends get a lower priority. In contrary, if the user is at home or at a holiday resort the e-mails from business partners get a lower priority and can in a possible implementation be forwarded to a virtual assistant VA of another user working in the same company as the user. In this way the virtual assistant VA can filter or deviate incoming e-mails according to the specific needs of the user in the specific situation. The virtual assistant VA can also take into account the telecommunication behavior TB of the user in the past. If, for example, the user has not in the past answered any e-mails from business partners when he was at home the virtual assistant VA can register this behavior and forward automatically any incoming e-mail to the virtual assistant VA of another person when the associated user is at home.

Fig. 5 shows a flow chart of a possible embodiment of a method for providing assistance to a user in performing telecommunication activities using a mobile device connected to the network according to the present invention.

In a first step S1 the telecommunication behavior TB of the user when performing telecommunication activities is registered and evaluated.

In a further step S2 the virtual assistant VA associated to the user is adapted depending on the evaluated telecommunication behavior of the user. The virtual assistant VA associated to the user is configured to assist the associated user in its telecommunication activities depending on the evaluated telecommunication behavior of the user in the past wherein the virtual assistant VA is represented by the virtual assistant character VAC being displayed by said user's mobile device 4 and being configured to express upon assisting said user a virtual behavior which simulates an appearance of a selected character loaded by the user's mobile device 4.

The virtual assistant VA is adapted to assist autonomically its associated user in telecommunication activities comprising the handling of administration of messages, contact data as well as organization data.

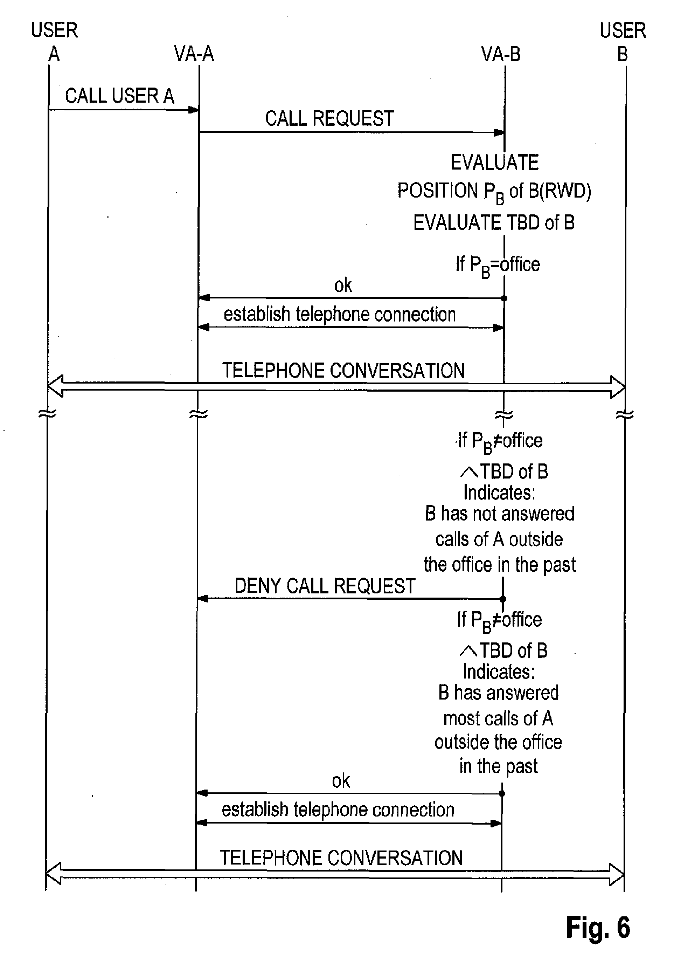

Figs. 6, 7, 8, 9 illustrate different examples of the autonomous assistance given by a virtual assistant VA assisting its associated user in his telecommunication activities.

Fig. 6 shows an example wherein a virtual assistant VA assists its associated user in setting up a telephone conversation with another user. In the shown example of fig. 6 the user A wishes to call a user B and instructs its virtual assistant VA-A, accordingly. The virtual assistant VA-A sends a call request to the virtual assistant VA-B of the other user B as shown in fig. 6. The virtual assistant VA-B evaluates the current position P_{B} of the other user according to real world data, RWD, in particular geographic data and further evaluates the telecommunication behavior data TBD of the user B. In the given example of fig. 6 if the other user B is in his office the virtual assistant VA-B will automatically accept the call request of user A and the two virtual assistants VAs will establish a telephone connection between both users A, B. After the telephone connection has been established between the two virtual assistants VA-A, VA-B the two users A, B can telephone via the network with each other.

On the other hand, if the virtual assistant VA-B of the called user B finds that the position P_{B} of the called user B is outside his office and that the former telecommunication behavior of the user B indicates that B has never answered a call of A outside his office in the past the virtual assistant VA-B of the user B will automatically deny the call request of the virtual assistant VA-A of the user A as shown in fig. 6. Alternatively, if the evaluation of the data by the virtual assistant VA-B of user B has the result that B has answered most calls of A also outside his office in the past the virtual assistant VA-B of user B will automatically accept the call request of the virtual assistant VA-A and both virtual assistants VA-A and VA-B will establish a telephone connection between both users A, B as shown in fig. 6. Accordingly the virtual assistant VA may perform a statistical evaluation of the telecommunication behavior data TBD of its associated user to assist its user depending on the statistical results.

As can be seen from fig. 6 the decision whether to accept the telephone call request from the virtual assistant VA-A of the user A is done by the virtual assistant VA-B of the user B and not by the user B himself. The decision made by the virtual assistant VA-B of user B is done by evaluating on the one hand real world data RWD such as geographic data and, moreover, on the other hand telecommunication behavior data TBD of the called user B. Accordingly, the virtual assistant VA-B takes into account the behavior of the user B in the past as well as the current physical situation of the user B in the real world.

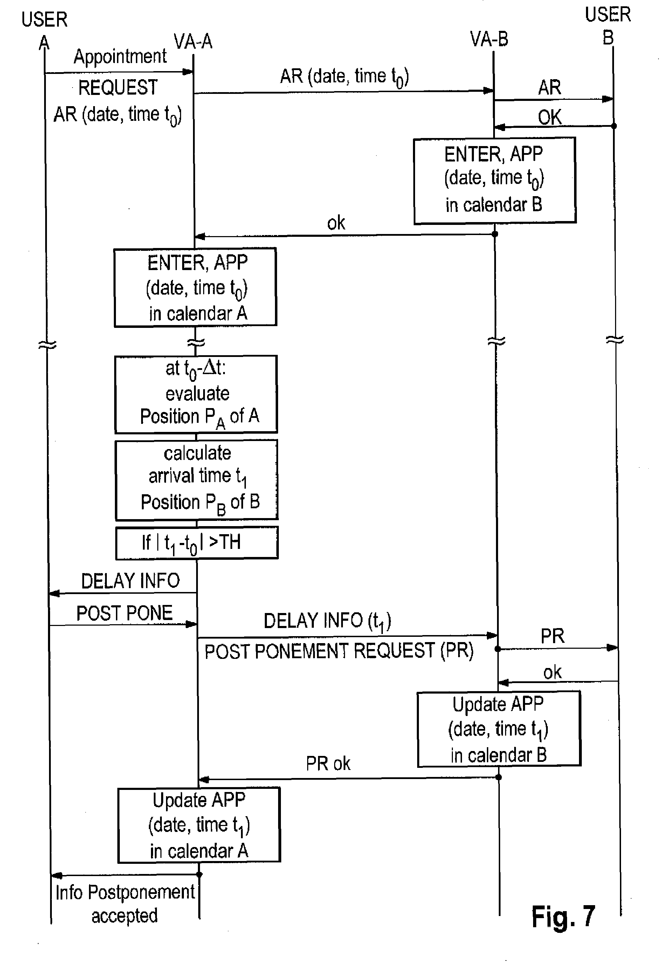

Fig. 7 shows a signal diagram for illustrating a further possible function provided by a virtual assistant VA according to the present invention. In the shown example user A and user B first set up an appointment for meeting each other. User A informs his virtual assistant VA-A that he wishes an appointment with the other user B at a specific date at a time to. The virtual assistant VA-A of the first user A sends an appointment request AR to the virtual assistant VA-B of user B indicating the desired date and time to. This appointment request AR can be displayed to the user B when accepts the appointment request in the shown example. After user B has accepted the appointment proposal the appointment is automatically entered by the virtual assistant VA-B into the calendar of user B indicating the desired date and time to. Further, the virtual assistant VA-B informs the virtual assistant VA-A of the user A that the appointment has been accepted and the appointment is automatically entered by the virtual assistant VA-A of user A into the calendar of user A as shown in fig. 7.

If the user A is driving for example with his car towards the office of user B to meet user B at the set-up appointment time to the virtual assistant VA-A can evaluate autonomously and automatically at a certain time before the appointment time to (t₀-Δt) the actual or current position of the mobile device 4 of user A to check whether user A will reach user B in time at the set appointment time to. On basis of the position P_{A} of the user A and for example the current speed V of his car the virtual assistant VA-A can calculate a real arrival time t₁ at the position P_{B} of user B. Then the virtual assistant VA-A compares the expected real arrival time with the original arrival time to. If the deviation is too high, i.e. more than a preset threshold T_{H} the virtual assistant VA-A will inform the user A automatically about the likely delay and ask the user A whether he wishes a postponement of the appointment. If the user A wishes to postpone the meeting the virtual assistant VA-A sets automatically a delay information and sends a postponement request PR to the virtual assistant VA-B of the other user B. The virtual assistant VA-B can forward the postponement request PR and ask the user B whether he accepts the postponement request. If the user B accepts the postponement request PR the virtual assistant VA-B of the user B updates the appointment automatically in the calendar B to the new arrival time t₁. Further, the virtual assistant VA-B informs the virtual assistant VA-A about the accepted postponement request PR and the virtual assistant VA-A updates automatically the calendar A to the new time t₁ as shown in fig. 7. Finally, the virtual assistant VA-A may inform the user A about the accepted postponement request. As can be seen from the example of fig. 7 the initiative to postpone the appointment comes from the virtual assistant VA-A of the user A and is handled by the virtual assistant VA-A of the user A a autonomously and automatically. This is a helpful function for instance for a travelling salesman A or the like visiting clients B at different locations and being dependent on the momentary traffic and other circumstances. In a possible implementation the virtual assistant VA-A not only evaluates the current position P_{A} of the user's mobile device 4 but also the current position of the other user's B device and also evaluates traffic information data to calculate the new realistic arrival time t₁. For example, user A sitting in his car and driving to user B does not have to handle his mobile device 4-i at all and not even have to think about whether he arrives at user B in time. Since the virtual assistant VA-B of user B is automatically informed by the virtual assistant VA-A about the delay time user B will not have to sit and wait for the delayed user A. Alternatively or additionally, the virtual assistant VA-A can also automatically establish a telephone connection between user A and user B when the intended visit will be most likely delayed. This process is triggered by the virtual assistant VA-A of user A and not by the user A himself.

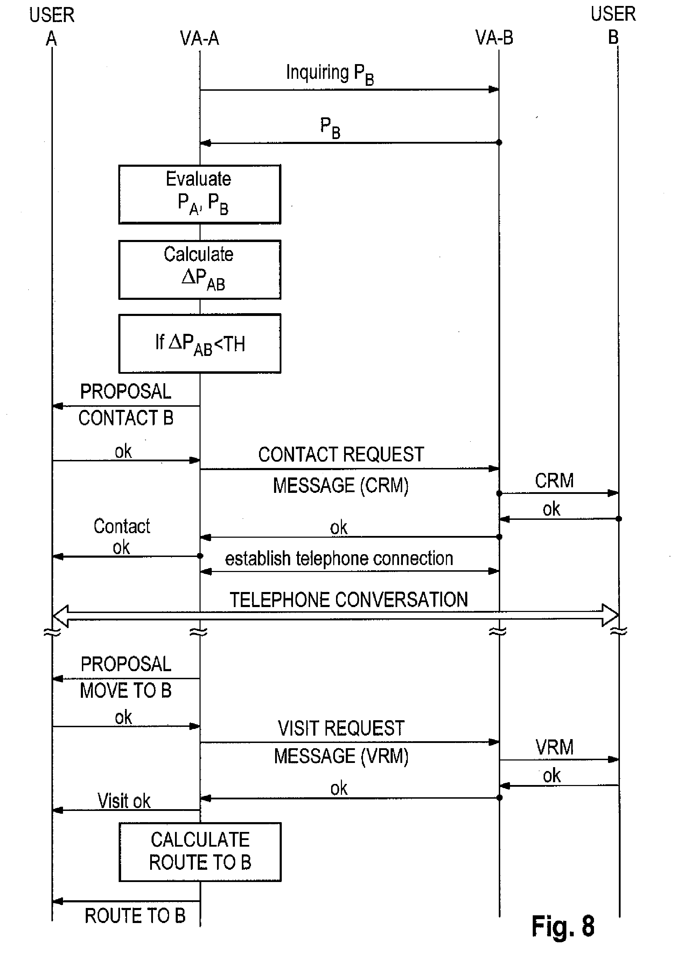

Fig. 8 shows a further example for the autonomous communication between virtual assistants VAs. In the given example of fig. 8 the virtual assistant VA-A establishes automatically a telephone connection to another user B being a friend of user A if the other user B is in the vicinity of user A. As can be seen in fig. 8 the virtual assistant VA-A can send on a regular basis or periodically a broadcast message to enquire positions of befriended users such as user B. In this example the virtual assistant VA-A of user A sends an enquiry to get the position P_{B} of user B and evaluates the current position of user A as well as the current position of user B (P_{A}, P_{B}) as shown in fig. 8. From the evaluated real world data RWD (P_{A}, P_{B}) the virtual assistant VA-A calculates a momentary distance ΔP_{AB} between the two users, i.e. between the two user's mobile devices 4 and can output a proposal to user A to contact B if the current distance is less than a predetermined threshold TH. If user A agrees to contact his friend user B the virtual assistant VA-A of user A can send a contact request message CRM to the virtual assistant VA-B of the user B. This contact request message CRM is forwarded by the virtual assistant VA-B to the other user B which might agree to establish a contact. When both users A, B had agreed to establish a contact the two virtual assistants VA-A and VA-B can establish automatically a telephone connection or set-up a video conference between both users A, B which then can talk with each other. Both users A, B can for example agree to meet at a specific location being close to both users A, B. Alternatively, the virtual assistant VA-A can also propose to user B that he might move towards the other user B which is at the moment in his vicinity. Then the virtual assistant VA-A can send a visit request message VRM to the virtual assistant VA-B of the other user and after the visit has been accepted by user B can calculate a route towards B so that user A can go or drive towards the current location of user B.

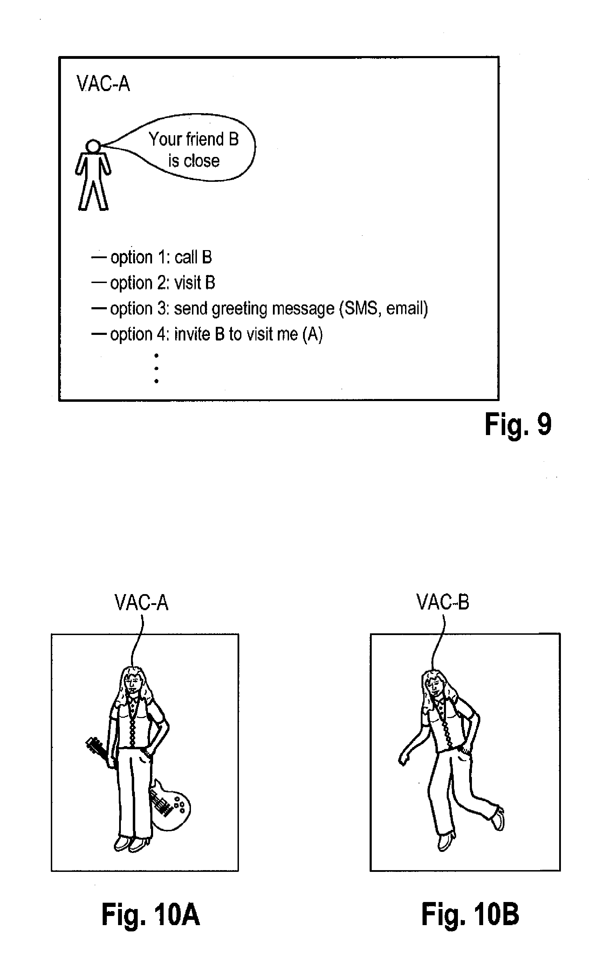

Fig. 9 shows different alternatives which the virtual assistant character VAC of the virtual assistant VA-A of user A can give or enquire from user A. If the virtual assistant VA-A finds that user B is close to user A he might ask user A whether he wants to call or visit user B. Further, for example, VA-A can ask user A whether he just wants to send a greeting message(emails, sms) or to invite B to come to him (A) as shown in fig. 9. Other options are also possible. In this example the virtual assistant VA-A of user A assists user A to enhance his social contacts with his friends in the physical world as well as in the virtual world over the network. Naturally, more users than two can participate to meet at a certain point in the physical real world. For example, if a user A being responsible for two employees or sub-users B-1, B-2 finds that two of his sub-users B-1, B-2 are close to each other he might instruct those sub-users B-1, B-2 to meet each other in the real world at a certain location. This function is handled by the virtual assistant VA-A of user A and user A might only be informed by his virtual assistant VA-A about the instructed meeting of user B-1, B-2 without triggering it himself.

Figs. 10A, 10B show examples for virtual assistant characters VAC selected by different users A, B. For example, the virtual assistant character VAC can express a male or female sex of the respective user and can also reflect a specific personality or character such as a rock star or a pop singer. The two virtual assistant characters VAC, VAC-B shown in fig. 10A, 10B might be downloaded from a virtual assistant server 5 such as shown in fig. 1.

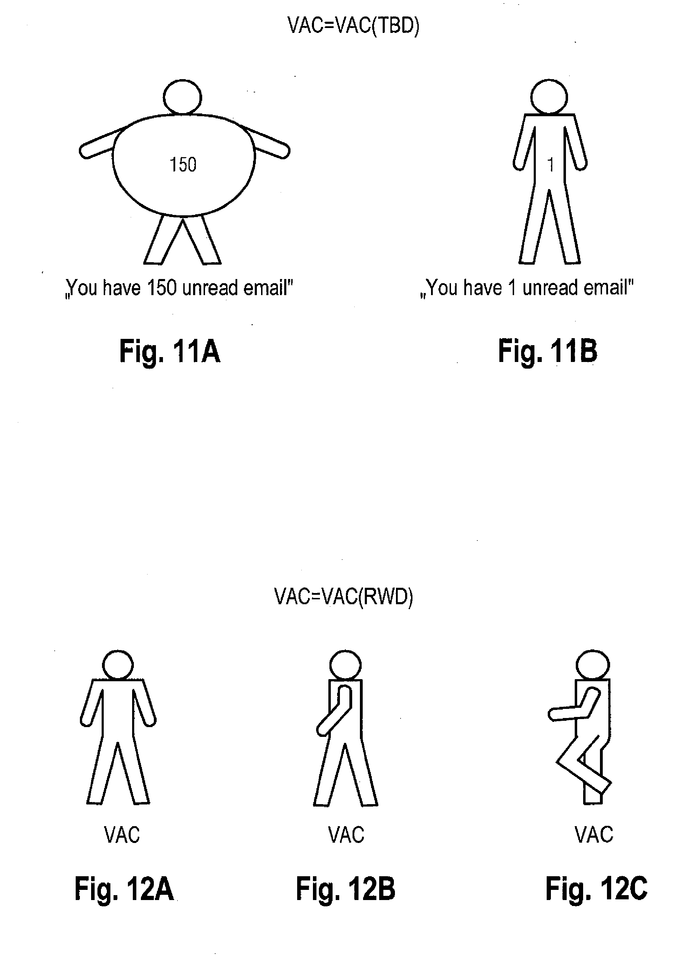

The appearance of the virtual assistant characters VAC can depend on the registered telecommunication behavior data TBD of the respective user. For example, if the user has not read 150 e-mails his virtual assistant character VAC might grow in size and change its form as shown in fig. 11 A. Fig. 11 A shows a fat deformed virtual assistant character VAC-A when the associated user A has not read a high number of e-mail or other messages. In contrast, if the associated user A has read his messages the size of the virtual assistant character VAC-A of the associated user A can diminish. For example, the virtual assistant character VAC of the user can be become very slim when the user only has to read a few, for example only one, message or e-mail as shown in fig. 11 B. Accordingly, the form and size of the virtual assistant character VAC of a virtual assistant associated to a user can depend on the registered telecommunication behavior TBD of the respective user. Looking at his virtual assistant character VAC the user can immediately see whether he has still many unread messages or not.

Figs. 12A, 12B, 12C show a virtual assistant character VAC whose form and behavior depends on real world data RWD, e.g. speed or movement of the associated user. If the geographic data of the user's mobile device 4 indicate that the user does not move his virtual assistant character VAC might be displayed as standing such as shown in fig. 12A. If the real world data RWD, for example the movement or speed data of the user's mobile device 4, indicate that the user is moving slowly the corresponding virtual assistant character VAC can be displayed as walking such as shown in fig. 12B. Moreover, if the real world data RWD such as the speed data indicates that the user's mobile device 4 is moving with a considerable speed the virtual assistant character VAC of the user can show a running character such as shown in fig. 12C. Accordingly, the behavior and form of the displayed virtual assistant character VAC can depend on registered telecommunication behavior data TBD as shown in figs. 11A, 11 B and/or real world data RWD such as shown in figs. 12A, 12B, 12C. In a further possible implementation also a combination is possible, i.e. in this embodiment the displayed virtual assistant character VAC depends on the registered telecommunication behavior data TBD and the real world data RWD. For example, a user which does not move and which has a lot of e-mails to read will be displayed by a virtual assistant character having a big size such as in fig. 11 A and standing such as shown in fig. 12A.

The virtual assistant character data can be loaded in a possible embodiment from a database via a virtual assistant server 5 as shown in fig. 1. For example, the database 6 as shown in fig. 1 can comprise different libraries, for example a VAC country library showing virtual assistant characters VACs for different countries such as Germany, The United States or China. For example, a user can select a virtual assistant character "Bavarian" for Germany and a virtual assistant character "Obama" for the United States. For example, a travelling manager travelling through the world can be represented by a "Bavarian"-VAC when he is currently in Germany and by a VAC "Obama" when he is currently in the United States. Other users having the virtual assistant character VAC of the user displayed will intuitively know where the respective user is at the moment, i.e. in which country. The virtual assistant character database can comprise further libraries such as a library for different professions such as pilot, engineer etc.

In a possible embodiment of the virtual assistant VA according to the present invention the virtual assistant VA is adapted to evaluate the registered telecommunication behavior data TBD of its associated user and/or to evaluate the registered real world data RWD of the user's mobile device 4 for generation of at least one personalized user recommendation PUR for the respective user. This recommendation can be generated on the basis of the evaluated telecommunication behavior data TBD or real world data RWD and further on the basis of data stored in the at least one local or remote data storage comprising also user data, infrastructure data, device data, virtual assistant character data and/or object data. The personalized user recommendation PUR can be given to the user by the virtual assistant character VAC representing the virtual assistant VA by means of a display or another graphical user interface. For example, the virtual assistant VA can give a recommendation to the user to visit a specific concert or going to a specific movie at a cinema in the real world. Further, the virtual assistant VA can recommend websites or give web links, in particular when the telecommunication behavior TB of the user indicates that the user has interest in these specific web links. For example, a user who has travelled many times to Italy (real world data) and who has visited many websites related to Italy (telecommunication behavior data) might get a personalized user recommendation PUR for an event taking place in the real world such as a concert of an Italian pop singer and/or an event taking place in the virtual world, for example a chat taking place in the internet. Further the virtual assistant VA can hint to specific TV-programs channels or radio programs being of interest for the user.

In a possible embodiment the virtual assistant VA performs an autonomous coordination of appointments and dates on the bases of calendar data of the respective user. The virtual assistant VA can invite other users or participants or make reservations for specific resources. The virtual assistant VA can provide intelligent functions and offer further functions with corresponding actions. For example, the virtual assistant VA can initiate that a suit of the user is sent for cleaning before the user is visiting a wedding. Further, the virtual assistant VA can order tickets for concerts, theatres or cinemas or store specific dates in the user's calendar. Further, the virtual assistant VA can remind the user to buy presents for birthdays stored in the user's calendar. The virtual assistant VA might provide further an intelligent link to websites offering such presents.

Further, the virtual assistant VA can offer address administration functions such as the automatic request for sending contact data to persons or users to whom the user communicates at the moment. Further, the virtual assistant VA can then automatically update the contact data of the other users or persons in an address administration program. The virtual assistant character VAC of the virtual assistant VA can in a possible implementation first ask the user whether the address data shall be stored or not.

The virtual assistant character VAC of the virtual assistant VA can show emotions of the user or other characters and can imitate the movement pattern and gestures of a person. For example, the virtual assistant character VAC can show emotions like laughing, crying, happiness, sadness, anger, boredom, nervousness, relax etc. expressed in a body language of the character. Further, the virtual assistant character VAC can imitate movements and gestures such a running, going, sitting, lying, dancing, singing, talking, clapping, etc.

The virtual assistant VA can give recommendations to the user depending on the previous telecommunication behavior of the user. The virtual assistant VA can for example point out that a record has been published by a preferred pop group of the user. It can also hint to interesting articles in online media such as online newspapers. Further, it might give tips for musical, cultural or sports events in the real world depending on the previous behavior of the user in the real world or virtual world.

In a possible embodiment the virtual assistant VA is an application program which can be executed in a processing unit of a user's mobile device 4. This virtual assistant application program can be downloaded in a possible embodiment from a server or from a data carrier read by the user's mobile device 4.

The virtual assistant VA of a user can in a possible embodiment perform a virtual dialogue with another virtual assistant VA to provide functions for the respective users of the virtual assistants. In this way an artificial intelligence is formed by a plurality of virtual assistants and created to the benefit of a plurality of users.

In a possible embodiment a best performance of each avatar or virtual assistant character VAC can be registered in a video file and can be sent to other users such as friends via a social network. In this way a user can inform other users how his virtual assistant character VAC behaved in the virtual world. In a possible implementation a virtual assistant VA of a user can imitate the behavior of another virtual assistant VA in the network. The virtual assistant VA of a user is self-adaptive.

In a possible embodiment the virtual assistant VA of a user can be adapted to the behavior of another virtual assistant VA of another user so that the behavior of the two virtual assistants match each other. For example, a virtual assistant VA of a manager can undergo a teach-in phase and then the behavior of the generated virtual assistant VA can be copied to other virtual assistants VAs of other managers within the same company. Accordingly, the virtual assistant VA can show an initial standard behavior which can later be adapted to the individual behavior of a specific manager. In a possible embodiment the virtual assistant VA can also take into account a predetermined policy of an organization. In this embodiment it is possible that the organization such as a company does have its own virtual assistant VA representing not a user but the organization as a whole. In this embodiment the virtual assistants VA of users or persons working in the organization can communicate with the virtual assistant VA representing the whole organization to assist the users in their telecommunication activities. In this implementation the virtual assistant VA-ORG of the organization can in a possible embodiment impose an organization policy for the telecommunication behavior of the employees of the organization. For example, the virtual assistant VA of a user receiving an incoming telephone call or email can first send an enquiry to the virtual assistant VA-ORG of the organization to ask whether he may answer the call / email or not. For instance, if the policy of the organization is that no business calls may be accepted outside the office the virtual assistant VA-ORG of the organization will instruct the virtual assistant VA of the employer or user not to accept the call because the call is a business call from a business cooperation partner and because the user is at the moment not in the office.

There is wide range of functions and options to use the virtual assistant VA according to the present invention. For example, a virtual assistant VA can direct a user to move left at a crossing because then he will pass a shop having a website which has been visited often by the user in the past (telecommunication behavior data) or whose virtual assistant VA has communicated in the past with the virtual assistant VA of the respective user.

An advantage of the virtual assistant VA according to the present invention is that it allows to filter intelligently incoming messages on different communication channels according to the current situation and/or state of the receiving user. For example, who is jogging in a wood where he has jogged in the past on a regular basis (real world data) does not get an incoming telephone call because it is blocked by its virtual assistant VA to give the user some time to relax. The virtual assistant VA might even distinguish between a situation where the user is running at a high speed or going at a low speed. In this specific example the virtual assistant VA can also evaluate sensor data such as heartbeat rate of the user detected by a microphone 13 of the user's mobile device 4 or other sensors 14 connected to the body of the user. An example is that an incoming business call is deviated automatically by the virtual assistant VA of the user to an answering machine of the user when the user's mobile device 4 is located in the vicinity of the user's holiday resort or when the surrounding sound detected by the microphone 13 of the user's mobile device 4 indicates that the sound level is too high to receive an incoming call, in particular an incoming business call. Accordingly, the virtual assistant VA of the present invention is sensitive to the behavior of the user both in the physical as well as in the virtual world in the past but is also sensitive to the current situation of the user in the real world when performing a telecommunication activity. Any telecommunication activities can be supported by the respective virtual assistant VA without be noticed by the user. For example, the virtual assistant VA can update the calendar of the user automatically by communicating with other virtual assistants VAs of the telecommunication system network. Other embodiments are possible. In particular, it is possible that the user can register himself at a server to participate in the system and to get a virtual assistant VA having a virtual assistant character VAC. Further, the participating user can undergo an authentication process before being registered as a user. In a possible embodiment the communication between the virtual assistant VA over the network can be formed in an encrypted form to avoid manipulations. The telecommunication system employing virtual assistants VAs according to the present invention can control a plurality of communication information systems or channels with different protocols and interface information. In a possible embodiment the system can use a uniform decision algorithm for the different communication channels. The virtual assistants VAS of different users can in a possible embodiment communicate with each other in a predetermined VA communication language according to a virtual assistant (VA) communication protocol (VACP). In this way the virtual assistants VAS can communicate autonomously with each other.

## Claims

1. A virtual assistant (VA) for providing assistance to an associated user in performing telecommunication activities using a mobile device (4) connected to a network (1),
wherein said virtual assistant (VA) is adaptive to a registered telecommunication behavior (TB) of the associated user when performing the telecommunication activities and wherein the virtual assistant (VA) is represented by a virtual assistant character (VAC) being displayed by said user's mobile device (4) and being configured to express upon assisting said user a virtual behavior which simulates an appearance of a selected character loaded by the user's mobile device (4).

2. The virtual assistant according to claim 1,
wherein said virtual assistant (VA) is adaptive to registered telecommunication behavior data (TBD) of its associated user when performing said telecommunication activities and to registered real world data (RWD) of said user's mobile device (4).

3. The virtual assistant according to claim 1,
wherein said virtual assistant (VA) is represented by a three-dimensional virtual assistant character (VAC) displayed on a user's interface (10) of said user's mobile device (4),
wherein said virtual assistant character (VAC) is loaded by the user's mobile device (4) from a virtual assistant-server (5).

4. The virtual assistant according to claim 2,
wherein said registered real world data (RWD) of said user's mobile device (4) comprises geographic data indicating an absolute or relative position (P) and/or a movement and/or a movement pattern of the user's mobile device (4) and/or of other devices transmitted to said user's mobile device (4) via said network (1),
wherein said real world data (RWD) of said user's mobile device (4) further comprises:
acoustic data generated by a microphone of the user's mobile device (4) and/or other devices transmitted to said user's mobile device (4) via said network (1);
image data and/or video data supplied by a camera of the user's mobile device (4) or of other devices transmitted to said user's mobile device (4) via said network (1),
wherein said real world data (RWD) of said user's mobile device (4) further comprises:
sensor data detected by at least one sensor of said user's mobile device (4) or connected to said user's mobile device (4) or transmitted to said user's mobile device (4) by other devices via said network (1).

5. The virtual assistant according to any of the preceding claims 1 - 4,
wherein said virtual assistant (VA) of said user is adapted to communicate autonomously with another virtual assistant (VA) associated to another user or with a virtual assistant (VA) associated with an object via said network (1), wherein the autonomous communication between virtual assistants (VAs) of different users or objects is controlled depending on the evaluated real world data (RWD) provided by the devices and/or real world data (RWD) provided by the objects.

6. The virtual assistant according to one of the preceding claims 1 - 5,
wherein said virtual assistant (VA) has access to at least one local and/or remote data storage (6; 9) comprising:
telecommunication behavior data (TBD) of the user,
registered real world data (RWD) of the user's mobile device (4),
user data of the associated user including user preferences and user personal data,
infrastructure data including network infrastructure data of the network (1),
device data of the user's mobile device (4) and/or other users' devices,
virtual assistant character data of the virtual assistant character (VAC) representing the virtual assistant (VA) of the user and/or characters representing other users; and
object data of objects.

7. The virtual assistant according to one of the preceding claims 1 - 6,
wherein the virtual assistant character (VAC) representing the virtual assistant (VA) of said user is adapted to express a virtual behavior which simulates the physical appearance, mimic, emotions, intonation, gestures and/or a moving pattern of said selected character downloaded by said user's mobile device (4) from a virtual assistant server (5) connected to said network (1) or loaded from a data carrier.

8. The virtual assistant according to claim 7,
wherein the virtual behavior expressed by said virtual assistant character (VAC) is changed dynamically in response to the evaluated real world data (RWD) of said user's mobile device (4) and/or the evaluated telecommunication behavior data (TBD) of the respective user, and
wherein said virtual assistant (VA) is adapted to interact with said associated user by speech commands exchanged between the virtual assistant character (VAC) representing said virtual assistant (VA) and the associated user by means of a user interface (10) of said user's mobile device (4).

9. The virtual assistant according to one of the preceding claims 1 - 8,
wherein said virtual assistant (VA) is adapted to assist its associated user in telecommunication activities comprising the handling and/or the administration of:
messages including emails, SMS, telephone calls, notifications, orders, requests;
contact data including addresses, telephone numbers, website addresses and
organization data including calendar data, appointments, time schedules, tasks, reservations, birthdays, holidays.

10. The virtual assistant according to one of the preceding claims 1 - 9,
wherein said virtual assistant (VA) is adapted to evaluate the registered telecommunication behavior data (TBD) of its associated user and/or to evaluate the registered real world data (RWD) of the user's mobile device (4) for generation of at least one personalized user recommendation (PUR) for the respective user on the basis of the evaluated data and on the basis of data stored in said at least one local or remote data storage (6; 9) comprising:
telecommunication behavior data (TBD) of the user,
real world data (RWD) of the user's mobile device (4),
infrastructure data, device data, virtual assistant, character data and/or object data.

11. The virtual assistant according to claim 10,
wherein the personalized user recommendation (PUR) is given to said user by the virtual assistant character (VAC) representing said virtual assistant (VA) of said user by means of a display and/or another user interface (10) of said user's mobile device (4),
wherein said personalized user recommendation (PUR) generated by said virtual assistant (VA) of said user comprises:
a user recommendation for media content or contacts accessible via said network (1) and/or
a user recommendation for events taking place in the real world, and/or
a user recommendation for the telecommunication behavior of the respective user; and/or
a user recommendation for movement of the user in the real world, and/or
a user recommendation for handling and/or administration of messages, contact data and/or organization data.

12. The virtual assistant according to one of the preceding claims 1 - 11,
wherein the virtual assistant (VA) comprises an application program executed by a processing unit (8) of said user's mobile device (4),
wherein said virtual assistant (VA) and/or the virtual assistant character (VAC) representing said virtual assistant (VA) is loaded by said user's mobile device (4) from a virtual assistant server (5) connected to said network (1) or from a data carrier read by said user's mobile device (4).

13. A method for providing assistance to a user in performing telecommunication activities using a mobile device (4) connected to a network (1), wherein the method comprises the steps of:
evaluating (S1) a telecommunication behavior (TB) of the user registered when performing the telecommunication activities; and
adapting (S2) a virtual assistant (VA) associated to the user and configured to assist the associated user in his telecommunication activities depending on the evaluated telecommunication behavior of the respective user,
wherein said virtual assistant (VA) is represented by a virtual assistant character (VAC) displayed by said user's mobile device (4) and configured to express upon assisting said user a virtual behavior which simulates an appearance of a selected character loaded by the user's mobile device (4).

14. A network having access points (3) to which devices of users are connected,
wherein each mobile device (4) comprises a virtual assistant (VA) providing assistance to an associated user in performing telecommunication activities using the respective mobile device (4),
wherein said virtual assistant (VA) is adapted to the telecommunication behavior (TB) of its associated user registered when performing the telecommunication activities,
wherein the virtual assistant (VA) is represented by a virtual assistant character (VAC) being displayed by said user's mobile device (4) and being configured to express upon assisting said user a virtual behavior which simulates an appearance of a selected character loaded by the user's mobile device (4).

15. The network according to claim 14,
wherein said virtual assistant (VA) is adapted to registered real world data (RWD) of said user's mobile device (4), said real world data (RWD) comprising:
geographic data indicating an absolute or relative position and/or movement or movement pattern of the user's mobile device (4) in the real world,
acoustic data generated by a microphone (13) of said user's mobile device (4), or by another device transmitted to said user's mobile device (4) via a core network (2),
image data and/or video data supplied by a camera (12) of said user's mobile device (4) and/or by a camera of another device transmitted to said user's mobile device (4) via said core network (2); and
sensor data detected by at least one sensor (14) of the user's mobile device (4) or transmitted to the user's mobile device (4) from another device of the network (1).
